# EUROPÄISCHE PATENTSCHRIFT

(11) **EP 0 960 551 B1**
(45) Veröffentlichungstag und Bekanntmachung des Hinweises auf die Patenterteilung: **18.07.2007**
(21) Anmeldenummer: 98912200.7
(22) Anmeldetag: 09.02.1998
(51) Int. Cl.: H04Q 11/04

(54) **VERFAHREN UND SCHALTUNGSANORDNUNG ZUM ÜBERTRAGEN VON NACHRICHTENZELLEN IM ZUGE VON VIRTUELLEN VERBINDUNGEN UNTERSCHIEDLICHER PRIORITÄTEN**
METHOD AND CIRCUIT FOR TRANSMITTING INFORMATION CELLS DURING VIRTUAL LINKING WITH VARIOUS PRIORITIES
PROCEDE ET CIRCUIT POUR TRANSMETTRE DES CELLULES DE DONNEES DANS LE CADRE DE LIAISONS VIRTUELLES PRESENTANT DIFFERENTES PRIORITES

(30) Priorität: 14.02.1997 DE 19705789
(43) Veröffentlichungstag der Anmeldung: 01.12.1999
(73) Patentinhaber: SIEMENS AKTIENGESELLSCHAFT, 80333 München (DE)
(72) Erfinder: BRIEM, Uwe, D-82216 Maisach (DE)
(86) Internationale Anmeldenummer: PCT/DE1998/000361
(87) Internationale Veröffentlichungsnummer: WO 1998/036586

(56) Entgegenhaltungen:
- EP-A- 0 526 104
- EP-A- 0 596 200
- EP-A- 0 641 099

## Beschreibung

Die Erfindung betrifft ein Verfahren und eine Schaltungsanordnung zum Übertragen von Nachrichtenzellen, die virtuellen Verbindungen unterschiedlicher Prioritäten zugeordnet sind, gemeinsam über zumindest eine Übertragungsleitung eines nach einem asynchronen Transfermodus arbeitenden ATM-Systems, wobei die Nachrichtenzellen bei ihrem Übertragen über die jeweilige Übertragungsleitung einen dieser individuell zugeordneten Pufferspeicher durchlaufen.

Bei einem derartigen ATM-System können auf einer Übertragungsleitung gleichzeitig eine Mehrzahl von virtuellen Verbindungen eingerichtet sein, für welche unterschiedliche Anforderungen bezüglich der Zellenverlustwahrscheinlichkeiten (unterschiedliche Prioritäten) gestellt sind. Beispielsweise kann für eine der virtuellen Verbindungen eine Zellenverlustwahrscheinlichkeit von 10⁻⁶, für eine weitere virtuelle Verbindung dagegen keine Zellenverlustwahrscheinlichkeit gefordert sein.

Aus der europäischen Patentanmeldung EP 0 641 099 A1 ist ein Verfahren und eine Vorrichtung zum Zwischenspeichern von Datenpaketen bekannt. Demgemäß wird ein in einer Warteschlange niedriger Priorität gespeichertes Datenpaket gelöscht, wenn ein ankommendes Datenpaket einer Warteschlange höhrer Priorität zugeordnet ist und die Gesamtlänge der Warteschlangen eine gewisse Länge überschritten hat. Mit einer derartigen Vorgehensweise ist aber keine optimale Auslastung der Warteschlangen bzw. der diese bildenden Pufferspeicher gegeben.

Aus der europäischen Patentanmeldung EP 0 526 104A2 ist ebenfalls ein Verfahren und eine Vorrichtung zum Zwischenspeichern von Datenpaketen bekannt. Ein Datenpaket wird in der niederpriorsten Warteschlange verworfen, wenn die Gesamtlänge der Warteschlangen eine gewisse Länge überschritten hat. Das neu hinzugekommene Datenpaket wird dann an der leeren Stelle in der Warteschlange eingeschrieben. Mit einer derartigen Vorgehensweise ist aber ebenfalls keine optimale Auslastung der Warteschlangen bzw. der diese bildenden Pufferspeicher gegeben.

Es ist nun Aufgabe der vorliegenden Erfindung einen Weg zu zeigen, wie bei einem Verfahren und einer Schaltungsanordnung der eingangs genannten Art die Übertragungsleitungen eines ATM-Systems und die diesen jeweils zugeordneten Pufferspeicher effizient ausgelastet werden können.

Diese Aufgabe wird bei einem Verfahren der eingangs genannten Art durch die im Patentanspruch 1 angegebenen Verfahrensmerkmale gelöst. Die Erfindung bringt dabei den Vorteil mit sich, daß insgesamt gesehen im Mittel weniger Verbindungen durch Zellenverluste geschädigt werden. Vor allem bei einem Datenverkehr, bei welchem Datenpakete einer virtuellen Verbindung vor einer Übertragung über die in Frage kommende Übertragungsleitung zunächst segmentiert und anschließend die einzelnen Segmente in jeweils einer Nachrichtenzelle übertragen werden, ist das Verwerfen einzelner Nachrichtenzellen ineffizient. Der in eine virtuelle Verbindung einbezogene Empfänger muß nämlich zur vermeidung von Datenfehlern ein gesamtes, durch Zellenverlust geschädigtes Datenpaket verwerfen. Außerdem wird die Anzahl der im Mittel fehlerfrei übertragenen Datenpakete, d. h. von Datenpaketen, die keinen Zellenverlust erleiden, gesteigert.

Darüber hinaus wird durch die vorliegende Erfindung ein wahlloses Verwerfen von einzelnen Nachrichtenzellen, durch welches mit hoher Wahrscheinlichkeit viele virtuelle Verbindungen gestört werden, vermieden.

Vorteilhafte Ausgestaltungen des Verfahrens gemäß der vorliegenden Erfindung ergeben sich aus den Patentansprüchen 2 bis 6. Der Vorteil besteht in einer weiteren Steigerung der effizienten Auslastung der Übertagungsleitungen und der diesen zugeordneten Pufferspeicher. So wird z.B. durch die Maßnahme gemäß Patentanspruch 3 erreicht, daß in einem ATM-System hinreichend oft die Durchgängigkeit der verbindungswege überprüft werden kann.

Darüber hinaus können durch die Maßnahmen gemäß der Patentansprüche 4 bis 6 diejenigen virtuellen Verbindungen bevorzugt für ein Verwerfen von Nachrichtenzellen herangezogen werden, für die gerade viele Nachrichtenzellen gepuffert sind und somit stärker als andere zu einer Überlast beitragen. Beispielsweise sind dies virtuelle Verbindungen, die festgelegte Verbindungs-Parameter nicht einhalten, z.B. die maximal für die jeweilige virtuelle Verbindung festgelegte Zellrate überschreiten.

Die vorstehend aufgezeigte Aufgabe wird durch eine Schaltungsanordnung gemäß Patentanspruch 7 sowie durch deren vorteilhaften Ausgestaltungen nach den Patentansprüchen 8 und 9 gelöst. Der Vorteil besteht dabei in einem insgesamt geringen schaltungstechnischen Aufwand, um die einzelnen Übertragungsleitungen und die diesen zugeordneten Pufferspeicher effizient auszulasten.

Im folgenden wird nun die vorliegende Erfindung anhand von Zeichnungen beispielsweise näher erläutert.
FIG 1 zeigt ein Blockschaltbild einer Schaltungsanordnung, bei welcher die Erfindung angewandt ist,
FIG 2 zeigt ein Prinzipschaltbild für die Bildung einer logischen Warteschlange und
FIG 3 zeigt ein Prinzipschaltbild für das Verwerfen der Zellen einer logischen Warteschlange.

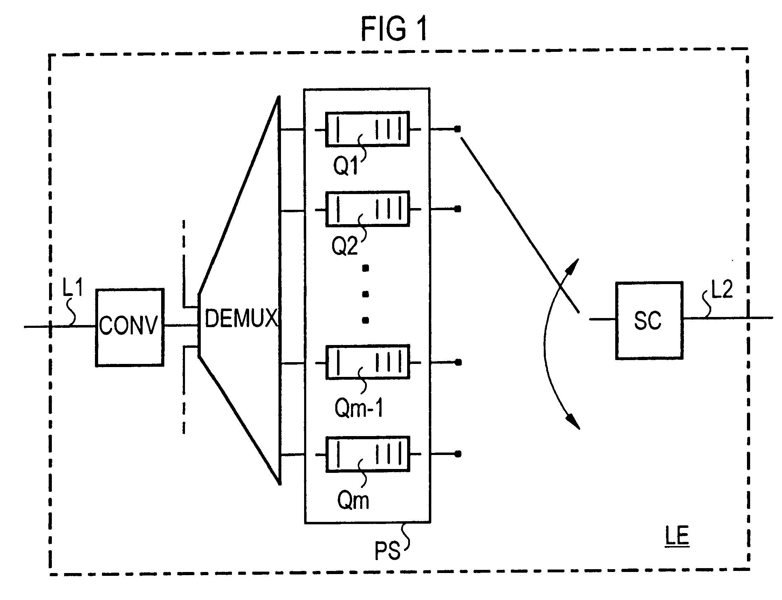

In FIG 1 ist eine Leitungseinrichtung LE schematisch dargestellt, die zwischen zwei Übertragungsleitungsabschnitte L1 und L2 eines nach einem asynchronen Transfermodus arbeitenden ATM-Systems eingefügt ist. Dabei sind lediglich diejenigen Schaltungselemente der Leitungseinrichtung LE aufgezeigt, die für das Verständnis der vorliegenden Erfindung erforderlich sind. Darüber hinaus ist diese Leitungseinrichtung stellvertretend für weitere in Übertragungsleitungsabschnitte des ATM-Systems eingefügte Leitungseinrichtungen wiedergegeben.

Darüber hinaus wird im folgenden auf das allgemeine ATM-Prinzip nicht näher eingegangen, da dies hinlänglich bekannt ist.

Auf dem Übertragungsleitungsabschnitt L1 treten Nachrichtenzellen ("cells") auf, die in bekannter Weise neben einem Informationsteil ("user part") über einen externen Zellenkopf ("header") verfügen. Dabei sind in einem solchen externen Zellenkopf unter anderem Angaben bezüglich der Zugehörigkeit zu einer bestimmten virtuellen Verbindung enthalten. Bei einer virtuellen Verbindung kann es sich entweder um eine virtuelle Kanalverbindung (Einzelverbindung) oder um eine virtuelle Pfadverbindung (Bündel mehrerer Einzelverbindungen) handeln. Einer virtuellen Kanalverbindung ist dabei eine virtuelle Kanalnummer VCI ("virtual canal identifier"), einer virtuellen Pfadverbindung dagegen eine virtuelle Pfadnummer VPI ("virtual path identifier") in dem externen Zellenkopf der jeweiligen Nachrichtenzelle zugeordnet. Im Falle einer virtuellen Pfadverbindung ist in dem externen Zellenkopf zusätzlich eine virtuelle Kanalnummer VCI angegeben, um die einzelnen, innerhalb der virtuellen Pfadverbindung geführten virtuellen Kanalverbindungen idendifizieren zu können.

Den Eingang der Leitungseinrichtung LE (FIG 1) bildet eine Konvertierungseinrichtung CONV. Diese setzt jeder auf dem Übertragungsleitungsabschnitt L1 auftretenden Nachrichtenzelle einen internen Zellenkopf ("header") voran, um die jeweilige Nachrichtenzelle innerhalb des ATM-Systems weiterleiten zu können. Dieser interne Zellenkopf wird nach Maßgabe des Inhaltes des in den Nachrichtenzellen jeweils enthaltenen externen Zellenkopfes gebildet. Dabei wird unter anderem nach Maßgabe der in dem jeweiligen externen Zellenkopf enthaltenen VCI bzw. VPI/VCI eine von m Warteschlangen-Identifizierungen QID ("queue identifications") statistisch zugeordnet. Die jeweilige Warteschlangen-Identifizierung QID bewirkt gegenüber der zugeordneten VCI bzw VPI/VCI eine Adressenreduktion und ist in den zugehörigen internen Zellenkopf aufgenommen.

Die auf diese Weise um einen internen Zellenkopf erweiterten Nachrichtenzellen werden nacheinander einer Demultiplex-Einrichtung DEMUX (FIG 1) zugeführt, welche über m Demultiplex-Ausgänge mit einem Pufferspeicher PS verbunden ist. Die Demultiplex-Ausgänge sind den genannten Warteschlangen-Identifizierungen QID individuell zugeordnet.

Der Pufferspeicher PS weist eine Vielzahl von Speicherplätzen auf, aus denen maximal m logische Warteschlangen gebildet werden können, wie im folgenden noch näher erläutert wird. Diese logischen Warteschlangen, die in FIG 1 mit Q1 bis Qm bezeichnet sind, werden von der Demultiplex-Einrichtung DEMUX her mit Hilfe der in den empfangenen Nachrichtenzellen enthaltenen Warteschlangen-Identifizierungen QID individuell angesteuert. Auf eine solche Ansteuerung einer logischen Warteschlange hin wird in diese die mit der gerade in Frage kommenden Warteschlangen-Identifizierung versehene Nachrichtenzelle übernommen. Die einzelnen logischen Warteschlangen bilden dabei jeweils einen "FIFO"-Speicher ("First-In-First-Out"-Speicher), der eine Mehrzahl von Nachrichtenzellen gleichzeitig zwischenspeichern kann.

Die logischen Warteschlangen (Q1 bis Qm) werden ausgangsseitig im Rahmen einer vorgegebenen Abfertigungsdisziplin ("cell scheduling") von einer Bedieneinrichtung SC ("scheduler") her in einer festgelegten Reihenfolge angesteuert. Dabei wird in einem solchen Lesezyklus aus jeder logischen Warteschlange eine Nachrichtenzelle entnommen und über den Übertragungsleitungsabschnitt L2 weitergeleitet.

Die logischen Warteschlangen können je nach dem Verkehrsaufkommen auf dem zugehörigen Übertragungsleitungsabschnitt L1 unterschiedliche Füllgrade aufweisen. Bei einem festgelegten Füllgrad des Pufferspeichers PS (FIG1) ist gemäß der vorliegenden Erfindung vorgesehen, daß bei Eintreffen einer Nachrichtenzelle, die einer virtuellen Verbindung (Einzelverbindung oder Pfadverbindung) relativ hoher Priorität (hohe Anforderung an die Zellenverlustwahrscheinlichkeit) zugeordnet ist, eine festgelegte Anzahl von Nachrichtenzellen einer ausgewählten virtuellen Verbindung niedriger Priorität verworfen wird, d.h. diese Anzahl von Nachrichtenzellen wird in der dieser virtuellen Verbindung gerade zugeordneten logischen Warteschlange des Pufferspeichers PS gelöscht. Die Anzahl kann dabei beispielsweise von der Länge der logischen Warteschlange abhängig sein. So können z.B. auch sämtliche in der betreffenden logischen Warteschlange gespeicherten Nachrichtenzellen verworfen, d.h. gelöscht werden.

Alternativ dazu kann auch so vorgegangen werden, daß sämtliche bis auf die erste der in der betreffenden logischen Warteschlange gerade gespeicherten Nachrichtenzellen verworfen werden. Damit wird erreicht, daß in dem in FIG 1 lediglich teilweise dargestellten ATM-System hinreichend oft die Durchgängigkeit der einzelnen Verbindungswege überprüft werden kann.

Für das zuvor beschriebene Verwerfen von Nachrichtenzellen können für die einzelnen logischen Warteschlangen Schwellwerte festgelegt werde, wobei bei Überschreiten eines solchen Schwellwertes durch eine logische Warteschlange die dieser zugeordnete virtuelle Verbindung bevorzugt für das Verwerfen herangezogen wird.

Bei Vorhandensein einer Mehrzahl von für ein Verwerfen von Nachrichtenzellen in Frage kommender logischer Warteschlangen kann die Auswahl entweder in einer festgelegten Reihenfolge oder nach einem Zufallsprinzip erfolgen. Dabei kann als Auswahlkriterium für die logischen Warteschlangen beispielsweise die Priorität der diesen Warteschlangen zugeordneten virtuellen Verbindungen herangezogen werden. Als weiteres Kriterium kann alternativ oder zuätzlich die momentane Länge der einzelnen logischen Warteschlangen dienen.

Mit diesen zuletzt genannten Alternativen ist es möglich, daß virtuelle Verbindungen vorrangig für das Verwerfen von Nachrichtenzellen berücksichtigt werden, die stärker als andere virtuelle Verbindungen zu einer Überlast beitragen. Beispiele hierfür sind virtuelle Verbindungen, für die vereinbarte Verbindungsparameter bezüglich der Übertragungsbitrate nicht eingehalten werden.

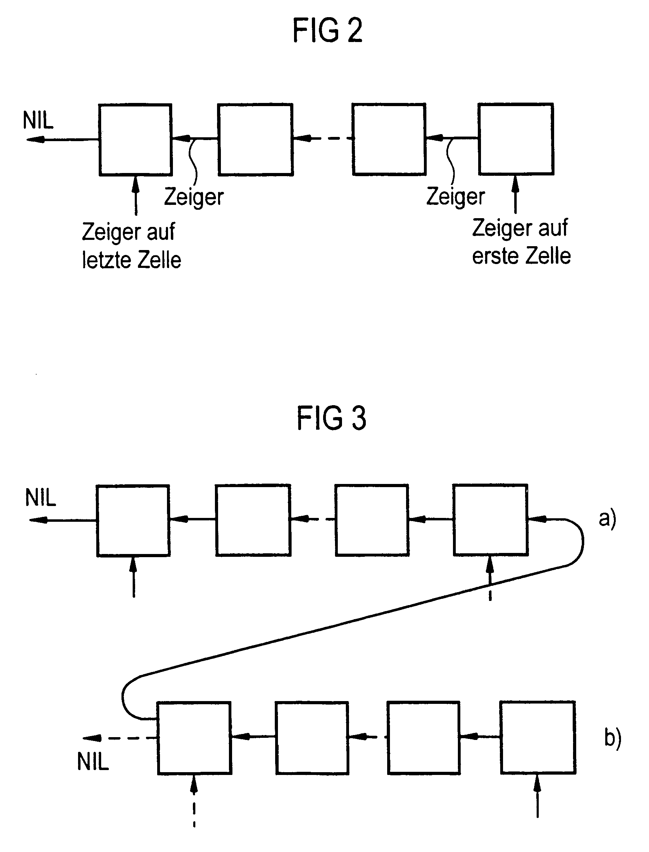

In FIG 2 ist die Bildung einer der logischen Warteschlangen gemäß FIG 1 schematisch dargestellt. Danach ist eine solche Warteschlange durch eine einfach verkettete Liste von Speicherplätzen des Pufferspeichers PS realisiert. Bei einer solchen Verkettung von Speicherplätzen sind der Anfang und das Ende einer logische Warteschlange durch einen Anfangszeiger (Adresse) und einen Endezeiger markiert. Darüber hinaus ist in jedem zu einer Warteschlange gehörenden Speicherplatz ein zusätzlicher Zeiger (Adresse) geführt, welcher den nachfolgenden Speicherplatz der Warteschlange bezeichnet. Lediglich der das Ende einer Warteschlange bildende Speicherplatz weist keinen derartigen Zeiger auf. Dies ist in FIG 2 durch die Bezeichnung NIL angedeutet.

In FIG 3 ist schematisch das Verwerfen sämtlicher Nachrichtenzellen einer logischen Warteschlange dargestellt. Dafür stelle die unter a) abgebildete verkettete Liste eine zu verwerfende logische Warteschlange dar, während unter b) eine Freiliste gezeigt ist, in welcher sämtliche freien Speicherplätze miteinander verkettet sind, wobei Anfang und Ende wieder durch einen Anfangszeiger und einen Endezeiger markiert sind. Für das Verwerfen wird dann in den momentan letzten Speicherplatz der Freiliste (anstelle von bisher NIL) ein Zeiger auf den ersten Speicherplatz der zu verwerfenden logischen Warteschlange eingetragen. Der unter a) bisher das Ende der zu verwerfenden logischen Warteschlange bildende Speicherplatz stellt nunmehr das Ende der Freiliste dar (durch NIL angedeutet).

Abschließend sei noch darauf hingewiesen, daß die vorliegende Erfindung lediglich als Beispiel anhand einer in FIG 1 dargestellten Schaltungsanordnung erläutert worden ist. Eine solche Schaltungsanordnung kann jedoch auch hinsichtlich ihrer schaltungstechnischen Realisierung modifiziert sein. So ist es möglich, daß, wie in FIG 1 angedeutet, mit der Demultiplex-Einrichtung DEMUX (FIG 1) gleichzeitig eine Mehrzahl von Übertragungsleitungsabschnitten (L1) verbunden ist, um der Demultiplex-Einrichtung DEMUX im Multiplexbetrieb über diese Übertragungsleitungsabschnitte übertragene Nachrichtenzellen zuzuführen. Außerdem können über die Bedieneinrichtung SC (FIG 1) mehrere Übertragungsleitungsabschnitte L2 angeschlossen sein, auf die die in dem Pufferspeicher PS gespeicherten Nachrichtenzelle verteilt werden können.

## Patentansprüche

1. Verfahren zum Übertragen von Nachrichtenzellen, die virtuellen Verbindungen unterschiedlicher Prioritäten zugeordnet sind, und die gemeinsam über zumindest eine Übertragungsleitung (L1, L2) eines nach einem asynchronen Transfermodus arbeitenden ATM-Systems übertragen werden, wobei die Nachrichtenzellen bei ihrem Übertragen über die jeweilige Übertragungsleitung einen dieser individuell zugeordneten, Pufferspeicher (PS) durchlaufen, wobei die Nachrichtenzellen bei einem bestimmten Füllgrad des Pufferspeichers (PS) verworfen werden,
**dadurch gekennzeichnet,**
**daß** bei dem einen bestimmten Füllgrad aufweisenden Pufferspeicher (PS) mit dem Eintreffen einer einer virtuellen Verbindung hoher Priorität zugehörigen Nachrichtenzelle auf der jeweiligen Übertragungsleitung (L1) von in dem Pufferspeicher (PS) gerade gespeicherten Nachrichtenzellen eine einer virtuellen Verbindung niedriger Priorität zugeordneten Warteschlange in Abhängigkeit von der Anzahl der für die jeweilige virtuelle Verbindung niedriger Priorität gespeicherten Nachrichtenzellen ausgewählt wird, und daß
die der ausgewählten logischen Warteschlange zugeordneten Nachrichtenzellen verworfen werden.

2. Verfahren nach Anspruch 1,
**dadurch gekennzeichnet,**
**daß** sämtliche in dem Pufferspeicher (PS) gerade gespeicherten Nachrichtenzellen der ausgewählten virtuellen Verbindung niedrigerer Priorität verworfen werden.

3. Verfahren nach Anspruch 1,
**dadurch gekennzeichnet,**
**daß** sämtliche bis auf die erste in dem Pufferspeicher (PS) gerade gespeicherten Nachrichtenzellen der ausgewählten virtuellen Verbindung niedrigerer Priorität verworfen werden.

4. Verfahren nach einem der Ansprüche 1 bis 3,
**dadurch gekennzeichnet,**
**daß** für das Verwerfen von Nachrichtenzellen eine virtuelle Verbindung ausgewählt wird, für welche gerade eine Vielzahl von Nachrichtenzellen in dem Pufferspeicher (PS) gespeichert ist.

5. Verfahren nach einem der Ansprüche 1 bis 3,
**dadurch gekennzeichnet,**
**daß** diejenige virtuelle Verbindung für das Verwerfen von Nachrichtenzellen ausgewählt wird, für welche gerade die größte Anzahl von Nachrichtenzellen in dem Pufferspeicher (PS) gespeichert ist.

6. Verfahren nach einem der Ansprüche 1 bis 5,
**dadurch gekennzeichnet,**
**daß** für das Verwerfen von Nachrichtenzellen der virtuellen Verbindungen als Kriterium deren Prioritäten und/oder die Anzahl der momentan für die einzelnen virtuellen Verbindungen gespeicherten Nachrichtenzellen herangezogen werden.

7. Schaltungsanordnung zum Übertragen von Nachrichtenzellen, die virtuellen Verbindungen unterschiedlicher Prioritäten zugeordnet sind, und die gemeinsam über zumindest eine Übertragungsleitung (L1, L2) eines nach einem asynchronen Transfermodus arbeitenden ATM-Systems übertragen werden, wobei die Nachrichtenzellen bei ihrem Übertragen über die jeweilige Übertragungsleitung einen dieser individuell zugeordneten Pufferspeicher (PS) durchlaufen, wobei die Nachrichtenzellen bei einem bestimmten Füllgrad des Pufferspeichers (PS) verworfen werden,
**dadurch gekennzeichnet,**
**daß** der jeweilige Pufferspeicher (PS) logische Warteschlangen (Q1 bis Qm) aufweist, die jeweils einer auf der jeweiligen Übertragungsleitung (L1, L2) eingerichteten virtuellen Verbindungen durch Speicher-Steuermittel (CONV) zugeordenet sind,
und **daß** für den Fall, daß der jeweilige Pufferspeicher (PS) einen bestimmten Füllgrad aufweist, mit dem Eintreffen einer einer virtuellen Verbindung hoher Priorität zugehörigen Nachrichtenzelle auf der jeweiligen Übertragungsleitung (L1) mit Hilfe der Speicher-Steuermittel (CONV) eine einer virtuellen Verbindung niedriger Priorität zugeordneten, logischen Warteschlange in Abhängigkeit von der Anzahl der für die Anzahl der für die jeweilige virtuelle Verbindung niedriger Priorität gespeicherten Nachrichtenzellen ausgewählt wird sowie die der ausgewählten, logischen Warteschlange zugeordneten Nachrichtenzellen verworfen werden.

8. Schaltungsanordnung nach Anspruch 7,
**dadurch gekennzeichnet,**
**daß** die Speicher-Steuermittel (CONV) zusätzlich derart ausgebildet sind, daß sämtliche in einer logischen Warteschlange (Q1 bis Qm) momentan gespeicherten Nachrichtenzellen verworfen werden.

9. Schaltungsanordnung nach Anspruch 7,
**dadurch gekennzeichnet,**
**daß** die Speicher-Steuermittel (CONV) zusätzlich derart ausgebildet sind, daß sämtliche in einer logischen Warteschlange momentan gespeicherten Nachrichtenzellen bis auf die erste Nachrichtenzelle verworfen werden.

## Claims

1. Method for the transmission of information cells, which are allocated to virtual connections having different priorities and are transmitted jointly via at least one transmission line (L1, L2) of an ATM system operating according to an asynchronous transfer mode, with the information cells, as they are transmitted via the respective transmission line, passing through a buffer memory (PS) which is allocated individually to said transmission line, with the information cells being discarded when the buffer memory (PS) is filled to a certain degree,
**characterised in that**
when the buffer memory (PS) is filled to a certain degree, on the arrival of an information cell associated with a high-priority virtual connection on the respective transmission line (L1), a wait list of information cells stored at the time in the buffer memory (PS), said wait list being allocated to a low-priority virtual connection, is selected as a function of the number of information cells stored for the respective low-priority virtual connection and the information cells allocated to the selected logical wait list are discarded.

2. Method according to claim 1,
**characterised in that**
all the information cells of the selected lower-priority virtual connection stored at the time in the buffer memory (PS) are discarded.

3. Method according to claim 1,
**characterised in that** all the information cells of the selected lower-priority virtual connection stored at the time in the buffer memory (PS) are discarded except for the first thereof.

4. Method according to one of claims 1 to 3,
**characterised in that**
for the discarding of information cells, a virtual connection is selected, for which a number of information cells is stored at the time in the buffer memory (PS).

5. Method according to one of claims 1 to 3,
**characterised in that**
the virtual connection, for which the greatest number of information cells is stored at the time in the buffer memory (PS), is selected for the discarding of information cells.

6. Method according to one of claims 1 to 5,
**characterised in that**
for the discarding of information cells of the virtual connections, the priorities of said virtual connections and/or the number of information cells stored at the time for the individual virtual connections is/are used as a criterion.

7. Circuit arrangement for the transmission of information cells, which are allocated to virtual connections having different priorities and are transmitted jointly via at least one transmission line (L1, L2) of an ATM system operating according to an asynchronous transfer mode, with the information cells, as they are transmitted via the respective transmission line, passing through a buffer memory (PS) which is allocated individually to said transmission line, with the information cells being discarded when the buffer memory (PS) is filled to a certain degree,
**characterised in that**
the respective buffer memory (PS) has logical wait lists (Q1 to Qm), each being allocated by means of memory control means (CONV) to a virtual connection established on the respective transmission line (L1, L2),
and in the event that the respective buffer memory (PS) is filled to a certain degree, on the arrival of an information cell associated with a high-priority virtual connection on the respective transmission line (L1), a logical wait list allocated to a virtual low-priority connection is selected with the aid of the memory control means (CONV) as a function of the number of information cells stored for the respective low-priority virtual connection and the information cells allocated to the selected logical wait list are discarded.

8. Circuit arrangement according to claim 7,
**characterised in that**
the memory control means (CONV) are also configured in such a manner that all the information cells stored at the time in a logical wait list (Q1 to Qm) are discarded.

9. Circuit arrangement according to claim 7,
**characterised in that**
the memory control means (CONV) are also configured in such a manner that all the information cells stored at the time in a logical wait list are discarded, except the first information cell thereof.

## Revendications

1. Procédé pour transmettre des cellules de messages qui sont associées à des liaisons virtuelles présentant différentes priorités et sont transmises ensemble sur au moins une ligne de transmission (L1, L2) d'un système ATM fonctionnant en mode de transfert asynchrone, les cellules de messages traversant, lors de leur transmission sur la ligne de transmission respective, une mémoire tampon (PS) associée individuellement à cette ligne, les cellules de messages étant rejetées lorsque la mémoire tampon (PS) présente un degré de remplissage déterminé, **caractérisé en ce que**, lorsque la mémoire tampon (PS) présente un degré de remplissage déterminé, et lorsqu'une cellule de messages appartenant à une liaison virtuelle haute priorité arrive sur la ligne de transmission respective (L1) de cellules de messages justement stockées dans la mémoire tampon (PS), une file d'attente associée à une liaison virtuelle basse priorité est sélectionnée en fonction du nombre des cellules de messages stockées pour la liaison virtuelle basse priorité respective, et **en ce que** les cellules de messages associées à la file d'attente logique sélectionnée sont rejetées.

2. Procédé selon la revendication 1, **caractérisé en ce que** toutes les cellules de messages de la liaison virtuelle basse priorité sélectionnée justement stockées dans la mémoire tampon (PS) sont rejetées.

3. Procédé selon la revendication 1, **caractérisé en ce que** toutes les cellules de messages de la liaison virtuelle basse priorité sélectionnée justement stockées dans la mémoire tampon (PS), sauf la première, sont rejetées.

4. Procédé selon l'une des revendications 1 à 3, **caractérisé en ce que** l'on sélectionne, pour le rejet de cellules de messages, une liaison virtuelle pour laquelle une pluralité de cellules de messages est justement stockée dans la mémoire tampon (PS).

5. Procédé selon l'une des revendications 1 à 3, **caractérisé en ce que** l'on sélectionne, pour le rejet de cellules de messages, la liaison virtuelle pour laquelle le plus grand nombre de cellules de messages est justement stocké dans la mémoire tampon (PS).

6. Procédé selon l'une des revendications 1 à 5, **caractérisé en ce que** l'on utilise comme critère pour le rejet de cellules de messages des liaisons virtuelles, leurs priorités et/ou le nombre des cellules de messages momentanément stockées pour les liaisons virtuelles individuelles.

7. Circuit pour transmettre des cellules de messages qui sont associées à des liaisons virtuelles présentant différentes priorités et sont transmises ensemble sur au moins une ligne de transmission (L1, L2) d'un système ATM fonctionnant en mode de transfert asynchrone, les cellules de messages traversant, lors de leur transmission sur la ligne de transmission respective, une mémoire tampon (PS) associée individuellement à cette ligne, les cellules de messages étant rejetées lorsque la mémoire tampon (PS) présente un degré de remplissage déterminé, **caractérisé en ce que** la mémoire tampon respective (PS) comprend des files d'attente logiques (Q1 à Qm) qui sont associées à chaque fois, grâce à des moyens de commande de mémoire (CONV), à une liaison virtuelle établie sur la ligne de transmission respective (L1, L2), et **en ce que**, dans le cas où la mémoire tampon respective (PS) présente un degré de remplissage déterminé, et lorsqu'une cellule de messages appartenant à une liaison virtuelle haute priorité arrive sur la ligne de transmission respective (L1), une file d'attente logique associée à une liaison virtuelle basse priorité est sélectionnée, à l'aide des moyens de commande de mémoire (CONV), en fonction du nombre des cellules de messages stockées pour la liaison virtuelle basse priorité respective, et les cellules de messages associées à la file d'attente logique sélectionnée sont rejetées.

8. Circuit selon la revendication 7, **caractérisé en ce que** les moyens de commande de mémoire (CONV) sont exécutés, en plus, de manière à ce que toutes les cellules de messages stockées momentanément dans une file d'attente logique (Q1 à Qm) soient rejetées.

9. Circuit selon la revendication 7, **caractérisé en ce que** les moyens de commande de mémoire (CONV) sont exécutés, en plus, de manière à ce que toutes les cellules de messages stockées momentanément dans une file d'attente logique soient rejetées, sauf la première cellule de messages.
